# EUROPÄISCHE PATENTANMELDUNG

(11) **EP 1 835 699 A1**
(43) Veröffentlichungstag der Anmeldung: **19.09.2007**
(21) Anmeldenummer: 06011998.9
(22) Anmeldetag: 10.06.2006
(51) Int. Cl.: H04L 29/08, G05B 19/00, G05B 19/418

(54) **Robotersteuerung**

(30) Priorität: 17.03.2006 EP 06005480
(71) Anmelder: ABB PATENT GmbH, 68526 Ladenburg (DE)
(72) Erfinder: Dai, Fan, Dr.-Ing. habil.,, 64673 Zwingenberg (DE); Unger, Joachim, 68259 Mannheim (DE); Groth, Thomas, 72480 Västeras (SE)
(74) Vertreter: Miller, Toivo

(57) **Zusammenfassung**

Die Erfindung betrifft eine Robotersteuerung, die als Echtzeitsteuerung ausgeführt ist, mit einem Verbindungsmodul zu einem Datennetzwerk (14), wobei mit einem Filtermodul (20) bestimmte Daten aus einem Datenstrom des Datennetzwerkes (14) auslesbar sind. Mit dem Filtermodul (20) sind Echtzeitdaten im Datennetzwerk (14) erkennbar und bedarfsweise ausleitbar. Zudem betrifft die Erfindung ein Verfahren zum Datenverkehr in Echtzeit zwischen einem echtzeitbasiertem Datensystem und einem Netzwerk.

## Beschreibung

Die Erfindung betrifft eine Robotersteuerung, die als Echtzeitsteuerung ausgeführt ist, mit einem Verbindungsmodul zu einem Datennetzwerk, wobei mit einem Filtermodul bestimmte Daten aus einem Datenstrom des Datennetzwerkes auslesbar sind.

Solche Robotersteuerungen sind allgemein bekannt. Üblicherweise sind Robotersteuerungen für Industrieroboter Echtzeitsteuerungen, um den besonderen Gefährdungspotential eines Roboters einen hohen Sicherheitsstandard entgegen zu setzen. Es ist auch allgemein bekannt, dass Robotersteuerungen mit Netzwerken verbunden sind, insbesondere lokale Netzwerke, die mit standardisierten Protokollen arbeiten, wie zum Beispiel TCP/lP um zeitunkritische oder allgemeine Daten mit anderen Rechner, beispielsweise einer übergeordneten Steuerung, auszutauschen. Als Beispiel für Daten die über ein solches Netzwerk zum Roboter gelangen seine Anweisungen, nach einem bestimmten zukünftigen Arbeitszyklus die Arbeit einzustellen oder in einem anderen Zyklus zu beginnen, genannt.

Ausgehend vom vorgenannten Stand der Technik ist es Aufgabe der Erfindung, eine Robotersteuerung der eingangs genannten Art sowie ein Verfahren zum Datenverkehr anzugeben, bei dem Daten in Echtzeit ausgetauscht werden.

Diese Aufgabe wird erfindungsgemäß durch eine Robotersteuerung der eingangs genannten Art mit den in Anspruch 1 angegebenen Merkmalen gelöst.

Die erfindungsgemäße Robotersteuerung, als Echtzeitsteuerung ausgeführt ist, ist demgemäß dadurch gekennzeichnet, dass mit einem Filtermodul Echtzeitdaten im Datennetzwerk erkennbar und bedarfsweise ausleitbar sind.

Datennetzwerke, die üblicherweise mit Robotersteuerung in Verbindung stehen, basieren häufig auf einem Datenprotokoll, das einen Datenstrom nicht in Echtzeit übermittelt, beispielsweise das standardisierte Protokoll TCP/IP. Durch das erfindungsgemäße Filtermodul sind nunmehr solche Daten im Datennetzwerk erkennbar, die als Echtzeitdaten für die Robotersteuerung gedacht sind. Diese Echtzeitdaten sind durch das Filtermodul entsprechend aus dem Datennetzwerk ausleitbar oder auslesbar.

Zudem ist es erfindungsgemäß vorgesehen, dass das Filtermodul mit einem ersten Empfangsmodul für Echtzeitdaten verbunden ist.

Die Robotersteuerung weist in diesem Fall also ein erstes Empfangsmodul auf, das die Daten vom Filtermodul empfängt und diese als Echtzeitdaten behandelt. Auf diese Weise ist sichergestellt, dass das Filtermodul lediglich die Daten im Datenstrom des Netzwerkes erkennt, während das erste Empfangsmodul die Echtzeitdaten empfängt und gegebenenfalls aufbereitet für die Verwendung in Echtzeitdatenfunktionen der Robotersteuerung. Dementsprechend ist es auch vorgesehen, dass das erste Empfangsmodul mit einem oder mehreren Echtzeitdatenfunktionsmodulen der Robotersteuerung verbunden ist.

In einer vorteilhaften Ausgestaltung weist das Filtermodul eine weitere Verbindung mit einem zweiten Empfangsmodul für IP-Daten auf.

In dieser Ausgestaltung des Erfindungsgegenstandes werden die Echtzeitdaten vorzugsweise als IP-Daten (IP = Internet Protocol) im Datennetzwerk verschickt und vom Filtermodul entsprechend erkannt. Das Filtermodul ist dann so ausgelegt, dass es eine Fallunterscheidung treffen kann, nämlich ob die empfangenen Daten Echtzeitdaten oder Daten für eine Standard-lP Funktion darstellen.

Durch ein Einspeisemodul für Echtzeitdaten ist es in der erfindungsgemäßen Robotersteuerung möglich, dass Echtzeitdaten in das Netzwerk sendbar sind.

Bestimmte Roboterfunktionen liefern nämlich Echtzeitdaten, so dass die Robotersteuerung solche Daten aus entsprechenden Roboterfunktionen erhält. Sollen diese Daten aus irgendwelchen Gründen in Echtzeit über das Netzwerk an eine andere Stelle übermittelt werden, ist es mit der erfindungsgemäßen Robotersteuerung mehr möglich, dies auch durchzuführen.

In einer besonders vorteilhaften Ausgestaltung des Erfindungsgegenstandes, sind die vorstehend genannten Module Programme oder Programmteile der Robotersteuerung.

Diese hat den Vorteil, dass der Erfindungsgegenstand auf standardisierten Ein- oder Ausgabegeräten, wie beispielsweise eine Ethernetkarte durch Aufspielen der Software realisierbar sind. Dabei hat es sich herausgestellt, dass das Filtermodul und das Einspeisemodul besonders vorteilhaft als Treiber oder Treiberprogramm realisiert werden, während das erste und das zweite Empfangsmodul vorteilhaft als Programmteile des Betriebssystems der Robotersteuerung ausgestaltet werden.

Zudem wird die Aufgabe durch ein Verfahren zum Datenverkehr in Echtzeit zwischen einem Echtzeit basiertem Datensystem und einem Netzwerk mit den in Anspruch 12 angegebenen Merkmalen gelöst.

Demgemäß weist ein erfindungsgemäßes Verfahren zum Datenverkehr in Echtzeit folgenden Verfahrensschritte auf:
- mit einem Filtermodul wird im Datensystem ein Datenstrom im Netzwerk auf bestimmte Daten überwacht,
- die bestimmten Daten werden dem Netzwerk entnommen und
- in den bestimmten Daten werden Echtzeitdaten anhand einer Kenngröße identifiziert und ein erstes Empfangsmodul weitergeleitet.

Innerhalb der Protokollregeln für das Netzwerk werden also Echtzeitdaten durch das Filtermodul identifiziert und gegebenenfalls entnommen. Das Erkennen solcher Echtzeitdaten erfolgt anhand einer Kenngröße, so dass der Netzfilter die Daten auch mit entsprechender Priorität behandeln kann. Solche Daten werden unmittelbar an ein erstes Empfangsmodul weitergeleitet, so dass der Netzfilter vorteilhaft schnell seine ldentifikationsaufgabe erfüllt.

In einer vorteilhaften Ausgestaltung werden als Nichtechtzeitdaten identifizierte Daten vom Netzfilter an ein zweites Empfangsmodul weitergeleitet.

Solche Daten können beispielsweise Informationen für bestimmte Programmteile der Robotersteuerung sein, die nicht dem Echtzeiterfordernis unterliegen und als Standard-IP-Aufgaben bezeichnet werden.

Eine weitere Ausgestaltung des erfindungsgemäßen Verfahrens sieht vor, dass Daten im Netzwerk um ein Mehrfaches schneller übertragen werden als Daten im Datensystem.

Auf diese Weise ist ein nahezu fehlerfreies Arbeiten mit den Datenströmen zwischen der Robotersteuerung und dem Netzwerk sichergestellt. Der Datenumfang, der durch die Realtimesteuerung bereitgestellt wird oder zu verarbeiten ist, ist damit wesentlich langsamer als derjenige Datenstrom, der durch das Netzwerk zur Verfügung gestellt werden kann. Durch entsprechende Wahl von Datepuffern oder anderer Maßnahmen, kann damit sichergestellt werden, dass insbesondere bei aus dem Netzwerk ankommenden Daten immer so viele Daten für die Robotersteuerung bereitstehen, dass auf der Realtimeseite des Filtermoduls ein Realtimedatenstrom zur Verfügung gestellt wird. Wird die Steuerung des Netzwerkes und die Zeitbedingungen im Netzwerk entsprechend auf die Robotersteuerung abgestimmt, ist es auf diese Weise ermöglicht, dass die Robotersteuerung insgesamt im Echtzeitmodus arbeitet.

Weitere vorteilhafte Ausgestaltungen des Erfindungsgegenstandes sind den weiteren abhängigen Ansprüchen zu entnehmen.

Anhand des in der Zeichnung dargestellten Ausführungsbeispiels sollen die Erfindung, ihre Vorteile sowie weitere Verbesserungen der Erfindung erläutert und näher beschrieben werden.

Es zeigt:

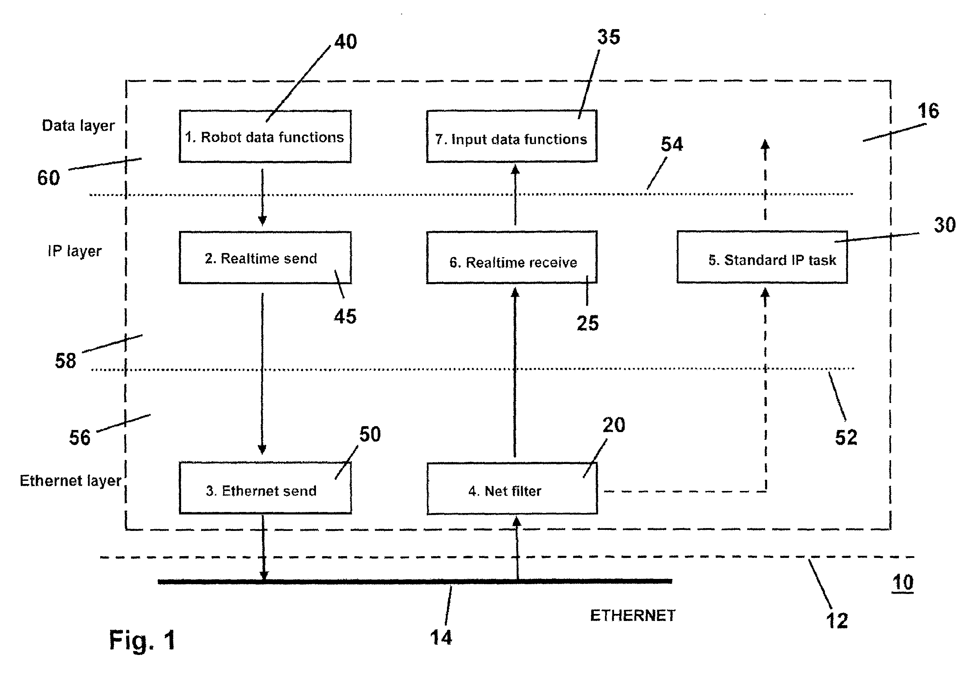

- Fig. 1: ein Funktionsschema einer Schnittstelle zwischen einer Robotersteuerung und einem Datennetzwerk.

Fig. 1 zeigt ein Schema 10 einer Schnittstelle 12 zwischen einem Datennetzwerk 14 und einer Robotersteuerung 16. Dabei ist die Schnittstelle 12 als Systemgrenze zwischen der gegenständlichen Ausgestaltung der Robotersteuerung 16 sowie einem Netzwerkanschluss des Ethernet 14 aufzufassen, beispielsweise in Ausgestaltung einer Steckverbindung. Im gewählten Beispiel wird das Ethernet 14 mit einem Datenstrom von 100MBit/sek. betrieben, während die Robotersteuerung 16 mit 1 KBit/4msek. am Datenstrom betrieben werden soll. Das Ethernet 14 wird zudem mit einem standardisierten Protokoll, nämlich dem TCP/IP (Transmission Controll Protocol/ Internet Protocol) betrieben. Diese Art von Netzwerken ist weit verbreitet und in einem hohen Maße standardisiert. In einer solchen Betriebsart werden Datenpakete durch das Ethernet 14 geschickt, wobei die Datenpakete neben den reinen Informationsdaten, auch Protokolldaten enthalten, die nähere Angaben über den Absender, den Empfänger oder die Datenmenge des Datenpaketes usw. enthalten. Anhand dieser Protokolldaten können die am Netzwerk angeschlossenen Geräte erkennen, ob ein Datenpaket für dieses Gerät bestimmt ist oder nicht. Die Paketierung der Daten hat aber auch zur Folge, dass das Ethernet 14 nicht als Echtzeitdatennetzwerk bezeichnet werden kann.

Im Unterschied dazu, arbeiten bestimmte Funktionen eines Roboters in Echtzeit, beispielsweise alle Funktionen des Roboters, die mit der Arbeitssicherheit zu tun haben, wie Kollisionsvermeidungsfunktionen oder Bewegungsfunktionen im Falle einer festgestellten Abweichung der Roboterbewegung von der geplanten Roboterbewegung.

Zudem weist ein üblicher Roboter Funktionen auf, die nicht zwangsweise in Echtzeit gesteuert werden müssen, beispielsweise Steuerungsfunktionen, die nicht unmittelbar in die Sicherheitsfunktionen eingreifen, wie Anweisung über der Anzahl der abzuarbeitenden Arbeitszyklen, reine Informationen, die der Roboter darstellen muss, oder die der Roboter an eine zentrale Leitstelle aus statistischen Gründen übermittelt. Insofern ist es bekannt, das Robotersteuerungen, Schnittstellen haben können, zum Beispiel eine Standard Ethernetkarte, die einen geregelten Datenverkehr zwischen der Robotersteuerung 16 mit dem Ethernet 14 ermöglichen.

Im gewählten Ausgestaltungsbeispiel des Erfindungsgegenstandes, weist die Robotersteuerung 16 einen Netzfilter 20 auf, der über die Schnittstelle 12 mit dem Ethernet 14 verbunden ist. Der Netzfilter 20 überwacht dabei die Datenpakete auf solche, die für die Robotersteuerung 16 bestimmt sind und liest sie gegebenenfalls aus dem Ethernet 14 aus. Der Netzfilter 20 ist zudem dafür ausgelegt, die ausgelesenen Daten daraufhin zu untersuchen, ob diese als Echtzeitdaten oder als normale Daten unter dem Standard IP als Protokollstandard behandelt werden. Dazu tragen solche Daten, die als Echtzeitdaten behandelt werden sollen eine zusätzliche Kennung, so dass der Filter seine Aufgabe besonders einfach wahrnehmen kann. Trägt ein Datenpaket keine spezielle Kennung, wird es als Paket mit "normalen IP-Daten" behandelt. Desweiteren ist der Netzfilter 20 mit einem Echtzeitdatenempfänger 25 sowie einem Standard-IP-Datenempfänger 30 verbunden. Dabei hat der Echtzeitdatenempfänger 25 die Aufgabe, die ihm zur Verfügung gestellten Echtzeitdaten dahingehen zu analysieren, welche Daten enthalten sind und welche Funktionen der Robotersteuerung 16 mit diesen Daten bedient werden müssen. In der Figur ist dies symbolisiert durch eine Verbindung zu einer beispielhaften Roboterdatenfunktion 35, wobei dies auch mehrere oder viele Funktionen der Robotersteuerung 16 können.

In den vorstehend näher beschriebenen Teilelementen der Robotersteuerung 16 wird das erfindungsgemäße Verfahren von Datenverkehr in Echtzeit zwischen einem echtzeitbasierten Datensystem und einem lokalen Netzwerk wie folgt realisiert.
Das Ethernet 14 ist das lokale Netzwerk, welches als Nicht-Echtzeitnetzwerk, mit einem TCP/IP Standard-Protokoll arbeitet. Der Netzfilter 20 ist an dem Ethernet 14 über die Schnittstelle 12 angeschlossen und überwacht die Datenpakete auf bestimmte Daten, die für die Robotersteuerung 16 bestimmt sind. Werden solche Daten gefunden, werden diese bestimmten Daten dem Netzwerk auch entnommen. Anhand einer Kenngröße, die im Datenpaket enthalten ist, z.B. ein Zahlencode, werden Echtzeitdaten erkannt und identifiziert und an den Echtzeitdatenempfänger 25 zur weiteren Behandlung der Daten weitergeleitet. Stellt der Netzfilter 20 jedoch fest, dass die Daten zwar für die Robotersteuerung 16 bestimmt sind, jedoch keine Echtzeitdaten enthalten, wird das Datenpaket zu dem Standarddatenempfänger 30 weitergeleitet. Auf diese Weise werden alle ankommenden und für die Robotersteuerung 16 bestimmten Daten an die für sie vorgesehene Stelle innerhalb der Robotersteuerung 16 zur Weiterbehandlung geleitet.

Die Figur zeigt noch einen Schementeil dafür auf, wie Echtzeitdaten behandelt werden, die an ein anderes Gerät als die Robotersteuerung 16, das an das Ethernet 14 angeschlossen ist, als Echtzeitdaten verschickt werden können. Dabei werden die Echtzeitdaten von bestimmten Datenfunktionen 40 des Roboters produziert, beispielsweise Positionsdaten, Zustandsdaten oder Anwendungsdaten des Roboters. Diese Echtzeitsendedaten, werden an einen Echtzeitsender 45 geschickt, wozu die Datenfunktionen mit diesem verbunden sind. Der Echtzeitdatensender 45 bereitet dabei die Daten zum Versenden ins Internet vor. Dieser kann zum Beispiel Filterfunktionen enthalten, die die Datenmenge reduzieren oder nur für das Senden bestimmte Daten aus der Datenmenge herausnehmen. Dies beinhaltet gegebenenfalls auch, die Daten so aufzubereiten und gegebenenfalls mit weiteren Protokolldaten zu versehen, dass ein Netzsender 50 sich insbesondere der Aufgabe widmen kann, die Datenpakete über die Schnittstelle 12 ins Ethernet 14 in geeigneter Weise zu übergeben.

Zur Darstellung einer günstigen Ausgestaltung der erfindungsgemäßen Robotersteuerung 16 sind noch eine erste Bereichsgrenze 52 und eine zweite Bereichsgrenze 54 in die Figur eingezeichnet, die die Robotersteuerung 16 in drei Teilbereiche unterteilt. In einen ersten Teilbereich 56 ist der Netzfilter 20 sowie die Sendeeinrichtung 50 angeordnet. Diese Elemente können als Bauelemente ausgeführt sein, aber auch als Programme oder Programmteile eines Datenverarbeitungsprogramms. Eine bevorzugte Ausgestaltung ist es, wenn diese Elemente 20, 50 als sogenannte Treiber oder Treiberprogramme ausgeführt sind.

Ein zweiter Bereich 58 enthält den Echtzeitdatenempfänger 25, den Standarddatenempfänger 30 sowie den Echtzeitdatensender 45. Auch diese Elemente 30, 25, 45 können vorteilhaft als Programme oder Programmteile, insbesondere als Module des Betriebssystems der Robotersteuerung 16 ausgestaltet sein.

Schließlich enthält ein dritter Bereich 60 die Symbole für die Echtzeitdatenfunktion 35 sowie die Roboterfunktion 40. Diese Symbole 35, 40 sollen für die Funktionen des Roboter stehen. Als Funktionen für den Empfang von Echtzeitdaten des Roboters kommen zum Beispiel Steuerungsanweisungen für die einzelnen Motoren oder Schrittmotoren der Achsantriebe eines Roboters in Betracht. Echtzeitdaten, die vom Roboter produziert werden sind zum Beispiel Positionsdaten der Roboterachsen, Zustandsdaten von Antrieben, Bremsen, Strömen oder Signale am Roboter oder Werkzeugdaten, die beispielsweise während eines Schweißvorgangsentstehen, während der Roboter in Bewegung ist.

### Bezugszeichenliste

- 10: Schema
- 12: Schnittstelle
- 14: Datennetzwerk / Ethernet
- 16: Robotersteuerung
- 20: Netzfilter
- 25: Echtzeitdatenempfänger
- 30: Standarddatenempfänger
- 35: Roboterdatenfunktion / Echtzeitdatenfunktion
- 40: Datenfunktionen / Roboterfunktionen
- 45: Echtzeitsender
- 50: Sendeeinrichtung
- 52: erste Bereichsgrenze
- 54: zweite Bereichsgrenze
- 56: erste Teilbereich
- 58: zweiter Bereich
- 60: dritter Bereich

## Patentansprüche

1. Robotersteuerung, die als Echtzeitsteuerung ausgeführt ist, mit einem Verbindungsmodul zu einem Datennetzwerk (14), wobei mit einem Filtermodul (20) bestimmte Daten aus einem Datenstrom des Datennetzwerkes (14) auslesbar sind, **dadurch gekennzeichnet, dass** mit dem Filtermodul (20) Echtzeitdaten im Datennetzwerk (14) erkennbar und bedarfsweise ausleitbar sind.

2. Robotersteuerung (16) nach Anspruch 1, **dadurch gekennzeichnet, dass** das Datennetzwerk (14) ein lokales Netzwerk ist, das mit einem nicht echtzeitbasierten Protokoll, insbesondere TCP/IP, arbeitet.

3. Robotersteuerung (16) nach Anspruch 1 oder 2, **dadurch gekennzeichnet, dass** das Filtermodul (20) mit einem ersten Empfangsmodul (25) für Echtzeitdaten verbunden ist.

4. Robotersteuerung (16) nach einem der vorgenannten Ansprüche, **dadurch gekennzeichnet, dass** das erste Empfangsmodul (25) mit wenigstens einem Echtzeitdatenfunktionsmodul (35) verbunden ist.

5. Robotersteuerung (16) nach einem der vorgenannten Ansprüche, **dadurch gekennzeichnet, dass** das Filtermodul (20) mit einem zweiten Empfangsmodul (30) für IP-Daten des nichtechtzeitbasierten Protokoll, insbesondere IP, verbunden ist.

6. Robotersteuerung (16) nach einem der vorgenannten Ansprüche, **dadurch gekennzeichnet, dass** mit einem Einspeisemodul (50) Echtzeitdaten in das Netzwerk sendbar sind.

7. Robotersteuerung (16) nach einem der vorgenannten Ansprüche, **dadurch gekennzeichnet, dass** ein Sendemodul (45) mit dem Einspeisemodul (50) verbunden ist.

8. Robotersteuerung (16) nach einem der vorgenannten Ansprüche, **dadurch gekennzeichnet, dass** die Echtzeitdaten von wenigstens einer Roboterfunktion (40) erzeugt sind.

9. Robotersteuerung (16) nach einem der vorgenannten Ansprüche, **dadurch gekennzeichnet, dass** das Filtermodul (20) und/oder das Einspeisemodul (50) als Programm, insbesondere als Treiber, oder Programmteil realisiert sind.

10. Robotersteuerung (16) nach einem der vorgenannten Ansprüche, **dadurch gekennzeichnet, dass** das erste (25) und / oder das zweite Empfangsmodul (30) und/oder das Sendemodul (50) als Programm oder Programmteil, insbesondere als Programmteil eines Betriebssystems, realisiert sind.

11. Robotersteuerung (16) nach einem der vorgenannten Ansprüche, **dadurch gekennzeichnet, dass** Filtermodul (20) und/oder das Einspeisemodul (50) und/oder das erste (25) und/oder das zweite Empfangsmodul (30) und/oder das Sendemodul (45) auf einer Schnittstellenkarte, insbesondere eine Ethernetkarte, angeordnet sind.

12. Verfahren zum Datenverkehr in Echtzeit zwischen einem echtzeitbasiertem Datensystem und einem Netzwerk, wobei mit einem Filtermodul (20) im Datensystem ein Datenstrom im Netzwerk auf bestimmte Daten überwacht wird, wobei die bestimmten Daten dem Netzwerk entnommen werden, wobei in den bestimmten Daten Echtzeitdaten anhand einer Kenngröße identifiziert und an ein erstes Empfangsmodul (25) weitergeleitet werden.

13. Verfahren nach Anspruch 12, **dadurch gekennzeichnet, dass** als NichtEchtzeitdaten identifizierte Daten an ein zweites Empfangsmodul (30) geleitetes werden.

14. Verfahren nach Anspruch 12 oder 13, **dadurch gekennzeichnet, dass** die Echtzeitdaten vom ersten Empfangsmodul (25) an wenigstens ein Echtzeitdatenfunktionsmodul (35) geleitet werden.

15. Verfahren nach einem der Ansprüche 12 bis 14, **dadurch gekennzeichnet, dass** mit einem Einspeisemodul (50) Daten in Echtzeit in das Netzwerk eingespeist werden.

16. Verfahren nach einem der Ansprüche 12 bis 15, **dadurch gekennzeichnet, dass** die Daten in Echtzeit von wenigstens einer Roboterfunktion (40) bereitgestellt werden.

17. Verfahren nach einem der Ansprüche 12 bis 16, **dadurch gekennzeichnet, dass** Daten im Netzwerk um ein mehrfaches schneller übertragen werden als Daten im Datensystem (14).

18. Verfahren nach einem der Ansprüche 12 bis 17, **dadurch gekennzeichnet, dass** das Datensystem eine Robotersteuerung ist.
